# EUROPÄISCHE PATENTSCHRIFT

(11) **EP 4 361 460 B1**
(45) Veröffentlichungstag und Bekanntmachung des Hinweises auf die Patenterteilung: **28.01.2026**
(21) Anmeldenummer: 22214057.6
(22) Anmeldetag: 16.12.2022
(51) Int. Cl.: F16B 25/00

(54) **SCHRAUBE**
SCREW
VIS

(30) Priorität: 27.10.2022 EP 22204159
(43) Veröffentlichungstag der Anmeldung: 01.05.2024
(73) Patentinhaber: SPAX International GmbH & Co. KG, 58256 Ennepetal (DE)
(72) Erfinder: LANGEWIESCHE, Frank, 58256 Ennepetal (DE); ROMANKO, Jacek, 58256 Ennepetal (DE)
(74) Vertreter: Dr. Solf & Zapf Patent- und Rechtsanwalts PartG mbB

(56) Entgegenhaltungen:
- EP-A1- 0 060 441
- EP-A1- 3 726 072
- EP-B1- 2 150 709
- WO-A1-2019/016092
- WO-A1-2019/086091
- US-A- 2 382 019

## Beschreibung

Die Erfindung betrifft eine Schraube gemäß dem Patentanspruch 1.

Im Stand der Technik existieren Schrauben, insbesondere Holzschrauben, in unterschiedlichen Variationen. Allerdings weisen herkömmliche Schrauben folgende Nachteile auf.

Beim Einschrauben herkömmlicher Schrauben in das Material verursachen diese ein nachteiliges Reißen des Holzes. Außerdem entsteht bei herkömmlichen Schrauben eine hohe Reibung beim Einbringen der Schrauben. EP3726072A1 beschreibt eine bekannte Schraube.

Es ist daher die Aufgabe der vorliegenden Erfindung, die Nachteile des Stands der Technik zu beseitigen.

Gelöst wird diese Aufgabe mit dem Gegenstand des unabhängigen Anspruchs. Vorteilhafte Weiterbildungen der Erfindung sind in den Unteransprüchen angegeben.

Die Erfindung betrifft eine Schraube, insbesondere Holzschraube, aufweisend ein Gewinde und eine konisch zulaufende Spitze, wobei hinter der Spitze ein zylindrisch ausgebildeter Schaft ausgebildet ist, wobei hinter dem Schaft eine

Verdickung angeordnet ist. Ein Kerndurchmesser des Gewindes ist geringer als ein Durchmesser der Verdickung.

Dadurch, dass hinter der Spitze ein zylindrischer Schaft und eine Verdickung angeordnet ist, ist es vorteilhaft möglich, dass das Material, insbesondere das Holz, in das die Schraube eingeschraubt wird, durchtrennt wird und ein Reißen des Materials, insbesondere des Holzes, verringert wird.

Die Schraube weist auf herkömmliche Weise eine Längsachse auf. Entlang dieser Längsachse erstreckt sich die Schraube von einem Kopf mit einem Kraftangriff bis hin zur Spitze.

Die Merkmale "hinter" und "vor" sind derart definiert, dass der hintere Teil der Schraube mit dem Kopf versehen ist und der vordere Teil der Schraube mit der Spitze versehen ist.

Das Merkmal, dass der zylindrische Schaft hinter der Spitze angeordnet ist, ist derart so zu verstehen, dass sich der zylindrische Schaft von der vorderen Spitze aus gesehen in Längsrichtung hinter der Spitze befindet.

Die Begriffe "Gewindetiefe" und "Steigung des Gewindes" sind für den Fachmann bekannt.

Das Gewinde erstreckt sich auf herkömmliche Weise zwischen dem Kopf und der Spitze. Zwischen dem Kopf und dem Gewinde kann sich ein weiterer zylindrischer Schaft befinden, der einen Durchmesser aufweist, der größer ist als der Kerndurchmesser des Gewindes. Das Merkmal des Kerndurchmessers des Gewindes ist dem Fachmann aus dem Stand der Technik bekannt.

Das Gewinde kann sich auf herkömmliche Weise bis zum vorderen Ende der Spitze erstrecken. Alternativ kann am vorderen Ende der Spitze ein Bereich angeordnet sein, an dem kein Gewinde vorhanden ist.

In einer bevorzugten Ausführungsform ist vorgesehen, dass die Verdickung zylindrisch, insbesondere ringförmig, insbesondere kreisringförmig, ausgebildet ist.

Alternativ kann es vorgesehen sein, dass die Verdickung konisch ausgebildet ist, wobei bevorzugt die Verdickung zur Spitze hin breiter wird.

Im Allgemeinen kann die Verdickung auch andere ballige Formen aufweisen.

Gemäß der Erfindung ist hinter dem Schaft eine Stufe angeordnet, wobei die Stufe in einem Winkel von 60° bis 120° zur Schraubenlängsachse angeordnet ist, wobei besonders bevorzugt die Stufe senkrecht zur Schraubenlängsachse angeordnet ist.

Durch das Vorsehen einer Stufe ist es vorteilhaft möglich, dass das Holz beim Einschrauben durch die Stufe aufgeweitet wird, so dass die Reibung beim weiteren Einschrauben der Schraube verringert werden kann.

In einer anderen bevorzugten Ausführungsform ist es vorgesehen, dass ein Durchmesser der Verdickung zwischen 10 % und 50 % einer Gewindetiefe des Gewindes beträgt.

In einer anderen bevorzugten Ausführungsform ist es vorgesehen, dass die Verdickung in Richtung der Schraubenlängsachse eine Länge aufweist, wobei die Länge kleiner ist als das 5fache einer Steigung des Gewindes.

In einer anderen bevorzugten Ausführungsform der Erfindung ist es vorgesehen, dass die Schraube mindestens eine weitere Verdickung aufweist, wobei die mindestens eine weitere Verdickung am Ende des Gewindes angeordnet ist, bevorzugt am Übergang zu einem Schaft an einem Kopf der Schraube, und/oder in einem Bereich des Gewindes angeordnet ist, bevorzugt in der Mitte des Bereichs.

Durch diese mindestens eine weitere Verdickung kann eine Aufweitung der Bohrung beziehungsweise Öffnung erreicht werden, in die die Schraube ein geschraubt wird. Dadurch kann die Reibung reduziert werden, die durch den anschließenden Schaft erzeugt wird.

Insbesondere kann der Schaft kreiszylinderförmig oder polygonförmig ausgebildet sein.

Für die mindestens eine weitere Verdickung gilt das oben für die Verdickung ausgeführte entsprechend.

Die mindestens eine weitere Verdickung kann identisch zur Verdickung ausgebildet sein. Die mindestens eine weitere Verdickung kann aber auch eine andere Ausbildung als die Verdickung haben.

In einer anderen bevorzugten Ausführungsform der Erfindung ist es vorgesehen, dass die mindestens eine weitere Verdickung zylindrisch, insbesondere ringförmig, insbesondere kreisringfömig, ausgebildet ist.

In einer anderen bevorzugten Ausführungsform der Erfindung ist es vorgesehen, dass die mindestens eine weitere Verdickung konisch ausgebildet ist, wobei bevorzugt die mindestens eine weitere Verdickung zur Spitze hin breiter wird. Dadurch kann eine Aufweitung der Bohrung beziehungsweise der Öffnung erreicht werden, wodurch die Reibung im weiteren Verlauf reduziert werden kann.

In einer anderen bevorzugten Ausführungsform der Erfindung ist es vorgesehen, dass an der mindestens einen weiteren Verdickung eine Stufe angeordnet ist, wobei bevorzugt die Stufe in einem Winkel von 60°-120° zur Schraubenlängsachse angeordnet ist, wobei besonders bevorzugt die Stufe senkrecht zur Schraubenlängsachse angeordnet ist.

In einer anderen bevorzugten Ausführungsform der Erfindung ist es vorgesehen, dass ein Durchmesser der mindestens einen weiteren Verdickung zwischen 10 % und 50 % der Gewindetiefe des Gewindes beträgt.

In einer anderen bevorzugten Ausführungsform der Erfindung ist es vorgesehen, dass die mindestens eine weitere Verdickung in Richtung der Schraubenlängsachse eine Länge aufweist, wobei die Länge kleiner ist als das 5-fache der Steigung des Gewindes.

Hinsichtlich der Vorteile und weiteren Aspekte der mindestens einen weiteren Verdickung gilt insbesondere das zur Verdickung Ausgeführte.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen jeweils in schematischer Ansicht:
Figur 1a zeigt schematisch eine erfindungsgemäße Schraube gemäß einer ersten Ausführungsform,
Figur 1b zeigt einen Ausschnitt der Schraube aus Figur 1a, wobei die Schraube um die Längsachse um 120° im Uhrzeigersinn gedreht worden ist,
Figur 1c zeigt den Ausschnitt der Schraube aus Figur 1b, wobei die Schraube um 120° im Uhrzeigersinn um die Längsachse gedreht worden ist,
Figur 2a zeigt schematisch eine erfindungsgemäße Schraube gemäß einer zweiten Ausführungsform,
Figur 2b zeigt analog Figur 1b einen Ausschnitt der Schraube aus Figur 2a, wobei die Schraube entlang der Längsachse um 120° im Uhrzeigersinn gedreht worden ist,
Figur 2c zeigt analog Figur 1c den Ausschnitt der Schraube aus Figur 2b, wobei die Schraube um 120° im Uhrzeigersinn entlang der Schraubenlängsachse gedreht worden ist,
Figur 3a zeigt schematisch eine erfindungsgemäße Schraube gemäß einer dritten Ausführungsform,
Figur 3b zeigt einen Ausschnitt der Schraube aus Figur 3a,
Figur 4 zeigt schematisch eine erfindungsgemäße Schraube gemäß einer vierten Ausführungsform.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleichwirkender Funktion mit identischen Bezugszeichen gekennzeichnet sind.

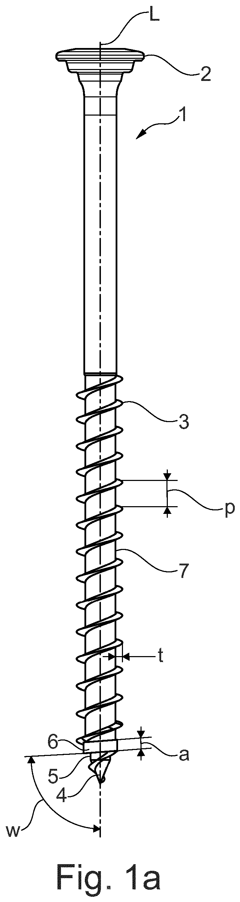

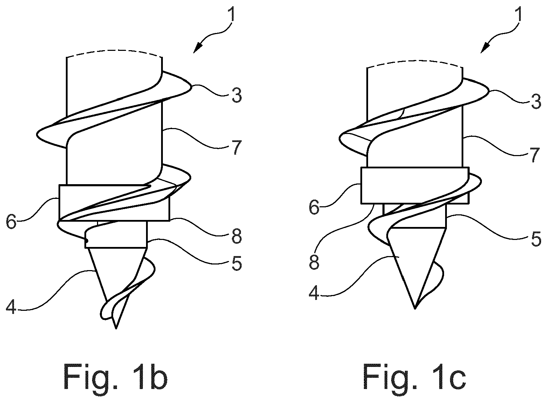

Die Figuren 1a, 1b und 1c zeigen schematisch eine erfindungsgemäße Schraube 1 gemäß einer ersten Ausführungsform der Erfindung.

Die Schraube 1 erstreckt sich entlang einer Schraubenlängsachse L. Am hinteren Ende der Schraube befindet sich ein Kopf 2 mit einem herkömmlichen Kraftangriff für ein geeignetes Betätigungswerkzeug.

Vor dem Kopf befindet sich ein zylindrisch ausgebildeter Schaft, mit einem Durchmesser, wobei der Durchmesser dieses Schaftes größer ist als ein Kerndurchmesser eines Gewindes 3, welches in einem Bereich 7 angeordnet ist. Der Bereich 7 mit dem Gewinde 3 befindet sich in Längsrichtung L gesehen vor dem zylindrischen Schaft. Zwischen dem zylindrischen Schaft und dem Bereich 7 mit dem Gewinde 3 ist eine Fase angeordnet, so dass sich der breitere Durchmesser des Schaftes auf den Kerndurchmesser des Gewindes 3 im Bereich 7 verjüngt.

Das Gewinde 3 weist eine Steigung P auf. Außerdem weist das Gewinde 3 eine Gewindetiefe t auf.

Weiterhin erstreckt sich die Schraube 1 bis hin zu einem vorderen Ende, an dem sich eine konisch zulaufende Spitze 4 befindet.

Hinter der Spitze 4 erstreckt sich ein zylindrischer Schaft 5, dessen Länge a kleiner ist als die Steigung P des Gewindes 3.

Hinter dem zylindrischen Schaft 5 ist eine zylindrisch ausgebildete Verdickung 6 angeordnet, wobei die Länge a der Verdickung 6 kleiner ist als die Steigung P.

Zwischen dem zylindrischen Schaft 5 und der zylindrischen Verdickung 6 ist eine Stufe 8 angeordnet, wobei diese Stufe 8 in einem Winkel in diesem Ausführungsbeispiel von 90° zur Längsachse L angeordnet ist.

Hinter der zylindrischen Verdickung 6 befindet sich der Bereich 7 mit dem Gewinde 3, wobei der Kerndurchmesser des Gewindes 3 geringer ist als der Durchmesser der Verdickung 6.

In diesem Ausführungsbeispiel erstreckt sich das Gewinde 3 in Längsrichtung L über die Verdickung 6 hinaus und auch über den zylindrischen Schaft 5 bis hin zum vorderen Ende der Spitze 4. Detailansichten und verdrehte Ansichten sind in den Figuren 1b und 1c sichtbar.

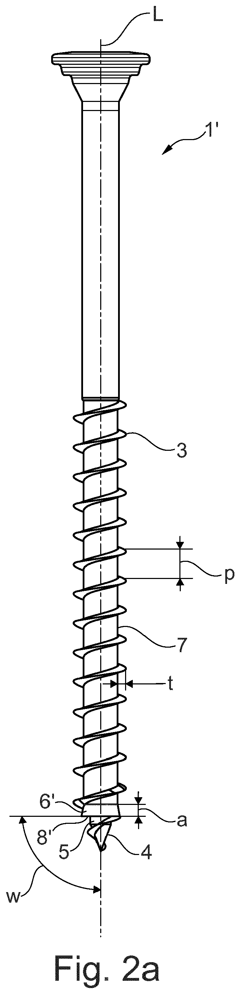

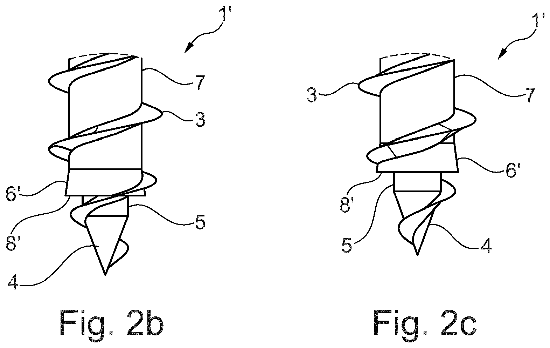

Die Figuren 2a, 2b und 2c zeigen schematisch eine zweite erfindungsgemäße Ausführungsform der vorliegenden Erfindung.

Die Schraube 1' erstreckt sich entlang einer Schraubenlängsachse L wie auch in der ersten Ausführungsform von einem Kopf 2 mit einem Kraftangriff bis hin zu einer konisch zulaufenden Spitze 4 im vorderen Bereich der Schraube 1'.

Die meisten Merkmale in der zweiten Ausführungsform sind analog zu den Merkmalen und Beschreibung der ersten Ausführungsform gegeben. Folgende Unterschiede weist die zweite Ausführungsform im Vergleich zur ersten Ausführungsform auf.

Wie auch die erste Ausführungsform, weist die Schraube 1' eine Verdickung 6' auf. Im Unterschied zur ersten Ausführungsform ist die Verdickung 6' konisch aufweitend ausgebildet, wobei der Durchmesser der Verdickung 6' in Richtung der Spitze größer wird. Die konische Verdickung 6' beginnt somit in ihrem hinteren Bereich mit dem Durchmesser des Kerndurchmessers des Gewindes 3 und weitet sich bis hin zu einem größeren Durchmesser auf.

Wie auch in der ersten Ausführungsform, befindet sich hinter der Spitze 4 der zylindrische Schaft 5 mit einer Erstreckung in Längsrichtung L kleiner als die Steigung P des Gewindes 3.

Zwischen dem zylindrischen Schaft 5 und der Verdickung 6' befindet sich wie auch in der ersten Ausführungsform eine Stufe 8', wobei sich die Stufe 8' in einem Winkel von 90° zur Längsachse L erstreckt.

Die Verdickung 6' erstreckt sich in Längsrichtung L entlang einer Länge a, wobei die Länge a in diesem Ausführungsbeispiel kleiner ist als die Steigung P des Gewindes 3.

Im Übrigen wird auf die Ausführungen zur ersten Ausführungsform verwiesen.

Die Figuren 2b und 2c zeigen verdrehte Ansichten des vorderen Bereichs der Schraube 1' mit der Spitze 4.

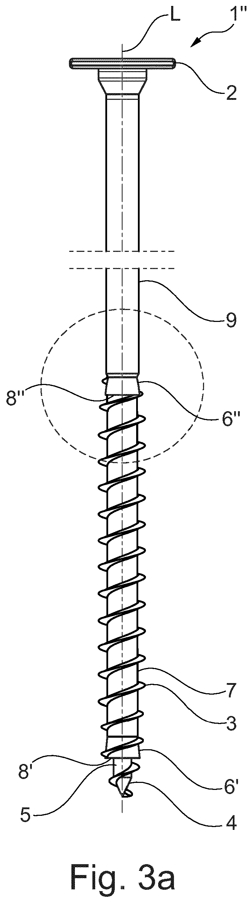

Figur 3a zeigt schematisch eine erfindungsgemäße Schraube 1" gemäß einer dritten Ausführungsform.

Die Schraube 1" weist eine erfindungsgemäße Verdickung 6' an der Spitze 4 auf, die in diesem Beispiel analog der Ausbildung der Figuren 2a-2c ausgebildet ist. Insofern wird auf die Ausführungen zu diesen Figuren verwiesen.

In dieser bevorzugten beispielhaften Ausführungsform weist die Schraube 1" eine weitere Verdickung 6" auf, welche am hinteren Ende des Bereichs 7 mit dem Gewinde 3 angeordnet ist und am Übergang zu einem Schaft 9 angeordnet ist, wobei der Schaft 9 beispielsweise zylindrisch oder polygonartig ausgebildet sein kann.

In dieser speziellen Ausführungsform ist die weitere Verdickung 6" ähnlich ausgebildet wie die Verdickung 6' an der Spitze 4; insofern wird auf die Ausführungen zu den Figuren 2a-2c verwiesen. Die weitere Verdickung 6" weitet sich somit konisch in Richtung zur Spitze 4 hin auf.

In diese Ausführungsform besteht aufgrund der weiteren Verdickung 6" der Vorteil, dass die Öffnung, in die die Schraube 1" eingeschraubt wird, durch die weitere Verdickung 6" aufgeweitet wird, bevor der Schaft 9 die Öffnung erreicht, wodurch die Reibung und der Widerstand maßgeblich verringert werden können.

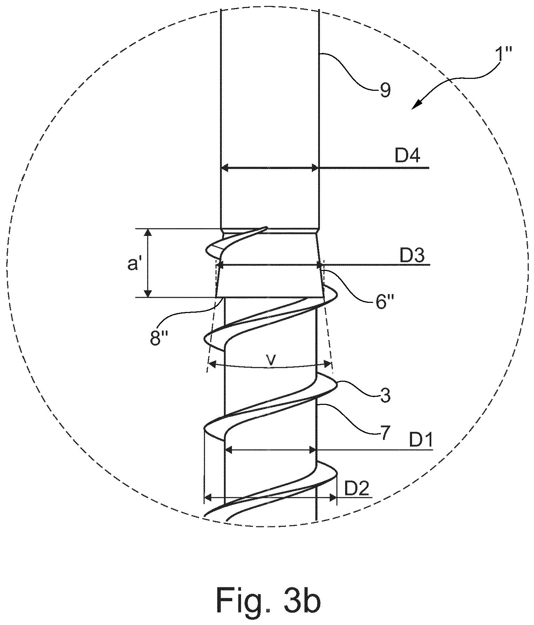

Figur 3b zeigt einen Ausschnitt der Schraube 1" aus Figur 3a, welcher in Figur 3a mit dem Kreis gekennzeichnet ist.

In Figur 3b ist dargestellt, dass der Durchmesser D4 des Schaft 9 kleiner ist als der maximale Durchmesser D3 der weiteren Verdickung 6". Dadurch wird vorteilhaft die Aufweitung der Öffnung, in die die Schraube eingeschraubt wird, erreicht.

Weiterhin dargestellt ist der Kerndurchmesser D1 des Bereichs 7 mit dem Gewinde 3, sowie der Gewindedurchmesser D2 des Gewindes 3.

Die weitere Verdickung 6" erstreckt sich entlang einer Länge a' und weitet sich in einem Winkel v auf. Der Winkel v ist der Winkel zwischen den Verlängerungen der Außenkontur der weiteren Verdickung 6". Der Winkel v beträgt 5-30 °. Außerdem erstreckt sich am vorderen Ende der weiteren Verdickung 6" eine Stufe 8", welche senkrecht zur Längsachse L der Schraube 1" verläuft. An dieser Stufe 8" befindet sich der maximale Durchmesser D3.

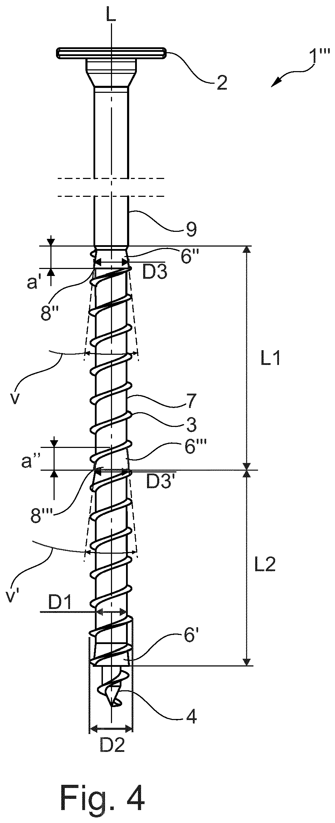

Figur 4 zeigt schematisch eine erfindungsgemäße Schraube 1‴ gemäß einer vierten Ausführungsform. Die Schraube weist analog der Ausführungsform der Figuren 3a und 3b eine konisch ausgebildete Verdickung 6' im Bereich der Spitze 4 auf. Weiterhin weist die Schraube 1‴ eine weitere Verdickung 6" im hinteren Teil des Bereichs 7 mit dem Gewinde 3 im Übergang zum Schaft 9 auf. Insoweit wird auf die obigen Ausführungen verwiesen.

In dieser speziellen Ausführungsform weist die Schraube 1‴ eine weitere, dritte Verdickung 6‴ auf, welche mittig im Bereich 7 mit dem Gewinde 3 angeordnet ist. Somit weist diese Ausführungsform insgesamt drei Verdickungen 6',6",6‴ auf.

Die dritte Verdickung 6‴ erstreckt sich in Richtung der Längsachse L entlang einer Länge a" und weitete sich konisch in Richtung der Spitze 4 in einem v' auf. Der Winkel v' beträgt 5 -30 °. Der Winkel v' ist der Winkel zwischen den Verlängerungen der Außenkontur der weiteren Verdickung 6‴.

Die dritte Verdickung 6‴ weist an der breitesten Stelle einen maximalen Durchmesser von D3' auf. Durchmesser D3' ist größer als Durchmesser D1 des Bereiches 7.

Außerdem erstreckt sich am vorderen Ende der dritten Verdickung 6‴ eine Stufe 8‴, welche senkrecht zur Längsachse L der Schraube 1‴ verläuft. An dieser Stufe 8‴ befindet sich der maximale Durchmesser D3'.

Die zuvor dargestellten Ausführungsbeispiele dienen lediglich der Illustration der Erfindung und dem besseren Verständnis der grundlegenden Idee. Die Ausführungsbeispiele sollen auf keinen Fall den allgemeinen Erfindungsgedanken beschränken.

### Bezugszeichenliste

- 1,1',1",1‴: Schraube
- 2: Kopf
- 3: Gewinde
- 4: Spitze
- 5: zylindrischer Schaft
- 6,6',6",6‴: Verdickung
- 7: Bereich
- 8,8',8",8‴: Stufe

- 9: Schaft

- L: Schraubenlängsachse
- P: Steigung
- t: Gewindetiefe
- a,a',a": Länge
- v,v',w: Winkel
- D1,D2,D3,D3',D4: Durchmesser

## Patentansprüche

1. Schraube (1,1'1",1‴), insbesondere Holzschraube, aufweisend ein Gewinde (3) und eine konisch zulaufende Spitze (4), **dadurch gekennzeichnet, dass** hinter der Spitze (4) ein zylindrisch ausgebildeter Schaft (5) ausgebildet ist, wobei hinter dem Schaft (5) eine Verdickung (6,6') und eine Stufe (8,8') angeordnet sind, wobei ein Kerndurchmesser des Gewindes (3) geringer ist als ein Durchmesser der Verdickung (6,6'), wobei die Stufe (8,8') in einem Winkel (w) von 60°-120° zu einer Schraubenlängsachse (L) angeordnet ist, wobei sich hinter der Verdickung (6,6') ein Bereich (7) mit Gewinde befindet.

2. Schraube (1,1'1",1‴) nach Anspruch 1, wobei die Verdickung (6) zylindrisch, insbesondere ringförmig, insbesondere kreisringfömig, ausgebildet ist.

3. Schraube (1,1'1",1‴) nach Anspruch 1, wobei die Verdickung (6') konisch ausgebildet ist, wobei bevorzugt die Verdickung (6') zur Spitze (4) hin breiter wird

4. Schraube (1,1'1",1‴) nach mindestens einem der vorhergehenden Ansprüche, wobei besonders bevorzugt die Stufe (8,8') senkrecht zur Schraubenlängsachse (L) angeordnet ist

5. Schraube (1,1'1",1‴) nach mindestens einem der vorhergehenden Ansprüche, wobei ein Durchmesser der Verdickung (6,6') zwischen 10 % und 50 % einer Gewindetiefe (t) des Gewindes (3) beträgt.

6. Schraube (1,1'1",1‴) nach mindestens einem der vorhergehenden Ansprüche, wobei die Verdickung (6,6') in Richtung der Schraubenlängsachse (L) eine Länge (a) aufweist, wobei die Länge (a) kleiner ist als das 5fache einer Steigung (P) des Gewindes (3).

7. Schraube (1,1'1",1‴) nach mindestens einem der vorhergehenden Ansprüche, aufweisend mindestens eine weitere Verdickung (6",6‴), wobei die mindestens eine weitere Verdickung (6",6‴) am Ende des Gewindes (3) angeordnet ist, bevorzugt am Übergang zu einem Schaft (9) an einem Kopf (2) der Schraube (1,1'1",1‴), und/oder in einem Bereich (7) des Gewindes (3) angeordnet ist, bevorzugt in der Mitte des Bereichs (7).

8. Schraube (1,1'1",1‴) nach Anspruch 7, wobei die mindestens eine weitere Verdickung (6",6‴) zylindrisch, insbesondere ringförmig, insbesondere kreisringfömig, ausgebildet ist.

9. Schraube (1,1'1",1‴) nach Anspruch 7, wobei die mindestens eine weitere Verdickung (6",6‴) konisch ausgebildet ist, wobei bevorzugt die mindestens eine weitere Verdickung (6",6‴) zur Spitze (4) hin breiter wird

10. Schraube (1,1'1",1‴) nach mindestens einem der vorhergehenden Ansprüche 7 bis 9, wobei an der mindestens einen weiteren Verdickung (6",6‴) eine Stufe (8",8‴) angeordnet ist, wobei bevorzugt die Stufe (8",8‴) in einem Winkel von 60°-120° zur Schraubenlängsachse (L) angeordnet ist, wobei besonders bevorzugt die Stufe (8",8‴) senkrecht zur Schraubenlängsachse (L) angeordnet ist

11. Schraube (1,1'1",1‴) nach mindestens einem der vorhergehenden Ansprüche 7 bis 10, wobei ein Durchmesser (D3,D3') der mindestens einen weiteren Verdickung (6",6‴) zwischen 10 % und 50 % einer Gewindetiefe (t) des Gewindes (3) beträgt.

12. Schraube (1,1'1",1‴) nach mindestens einem der vorhergehenden Ansprüche 7 bis 11, wobei die mindestens eine weitere Verdickung (6",6‴) in Richtung der Schraubenlängsachse (L) eine Länge (a',a") aufweist, wobei die Länge (a',a") kleiner ist als das 5fache einer Steigung (P) des Gewindes (3).

## Claims

1. Screw (1,1'1",1‴), in particular wood screw, having a thread (3) and a tapered tip (4), **characterized in that** a cylindrical shaft (5) is formed behind the tip (4), wherein a thickened portion (6,6') and a step (8,8')are arranged behind the shaft (5), wherein a core diameter of the thread (3) is smaller than a diameter of the thickened portion (6,6'), and wherein the step (8,8') is arranged at an angle (w) of 60°-120° to a screw longitudinal axis (L), whereby behind the thickened portion (6, 6'), there is a region (7) with a thread.

2. Screw (1,1'1",1‴) according to Claim 1, wherein the thickened portion (6) is cylindrical, in particular annular, in particular circular.

3. Screw (1,1'1",1‴) according to Claim 1, wherein the thickened portion (6') is conical, wherein the thickened portion (6') preferably gets wider towards the tip (4).

4. Screw (1,1'1",1‴) according to at least one of the preceding claims, wherein the step (8,8') is particularly preferably arranged perpendicular to the screw longitudinal axis (L).

5. Screw (1,1'1",1‴) according to at least one of the preceding claims, wherein a diameter of the thickened portion (6,6') is between 10% and 50% of a thread depth (t) of the thread (3).

6. Screw (1,1'1",1‴) according to at least one of the preceding claims, wherein the thickened portion (6,6') has a length (a) in the direction of the screw longitudinal axis (L), wherein the length (a) is less than 5 times a pitch (P) of the thread (3).

7. Screw (1,1'1",1‴) according to at least one of the preceding claims, having at least one further thickened portion (6",6‴), wherein the at least one further thickened portion (6",6‴) is arranged on the end of the thread (3), preferably at the transition to a shank (9) on a head (2) of the screw (1,1'1",1‴), and/or is arranged in a region (7) of the thread (3), preferably in the centre of the region (7).

8. Screw (1,1'1",1‴) according to claim 7, wherein the at least one further thickened portion (6",6‴) is cylindrical, in particular annular, in particular circular.

9. Screw (1,1'1",1‴) according to claim 7, wherein the at least one further thickened portion (6",6‴) is conical, wherein the at least one further thickened portion (6",6‴) preferably gets wider towards the tip (4).

10. Screw (1,1'1",1‴) according to at least one of the preceding claims 7 to 9, wherein a step (8",8‴) is arranged on the at least one further thickened portion (6",6‴), wherein the step (8",8‴) is preferably arranged at an angle of 60°-120° to the screw longitudinal axis (L), wherein the step (8",8‴) is particularly preferably arranged perpendicular to the screw longitudinal axis (L).

11. Screw (1,1'1",1‴) according to at least one of the preceding claims 7 to 10, wherein a diameter (D3,D3') of the at least one further thickened portion (6",6‴) is between 10% and 50% of a thread depth (t) of the thread (3).

12. Screw (1,1'1",1‴) according to at least one of the preceding claims 7 to 11, wherein the at least one further thickened portion (6",6‴) has a length (a',a") in the direction of the screw longitudinal axis (L), wherein the length (a',a") is less than 5 times a pitch (P) of the thread (3).

## Revendications

1. Vis (1,1'1",1‴) , en particulier vis à bois, comportant un filetage (3) et une pointe conique (4), **caractérisée en ce qu'**une tige (5) cylindrique est formée derrière la pointe (4), un gradin (8, 8') et un épaississement (6, 6') étant disposés derrière la tige (5), le diamètre du noyau du filetage (3) étant inférieur au diamètre de l'épaississement (6, 6'), et le gradin (8, 8') étant disposé selon un angle (w) de 60° à 120° par rapport à un axe longitudinal de la vis (L), une zone (7) filetée étant située derrière le épaississement (6, 6').

2. Vis (1, 1'1", 1"") selon la revendication 1, dans laquelle l'épaississement (6) est de forme cylindrique, en particulier annulaire, en particulier circulaire.

3. Vis (1, 1'1", 1") selon la revendication 1, dans laquelle l'épaississement (6') est de forme conique, l'épaississement (6') s'élargissant de préférence vers la pointe (4).

4. Vis (1, 1'1", 1‴) selon au moins l'une des revendications précédentes, le gradin (8, 8') étant de préférence disposé perpendiculairement à l'axe longitudinal de la vis (L).

5. Vis (1, 1'1", 1‴) selon au moins l'une des revendications précédentes, le diamètre de l'épaississement (6, 6') étant compris entre 10 % et 50 % d'une profondeur de filetage (t) du filetage (3).

6. Vis (1,1'1"1"') selon au moins l'une des revendications précédentes, dans laquelle l'épaississement (6,6') présente une longueur (a) dans la direction de l'axe longitudinal de la vis (L), la longueur (a) étant inférieure à 5 fois une pente (P) du filetage (3).

7. Vis (1,1'1"1‴) selon au moins l'une des revendications précédentes, présentant au moins un autre épaississement (6",6"'), l'au moins un autre épaississement (6",6"') est disposé à l'extrémité du filetage (3), de préférence à la transition vers une tige (9) à une tête (2) de la vis (1,1'1",1‴), et/ou dans une zone (7) du filetage (3), de préférence au milieu de la zone (7).

8. Vis (1,1'1",1"') selon la revendication 7, dans laquelle l'au moins un autre épaississement (6", 6‴) est de forme cylindrique, en particulier annulaire, en particulier circulaire.

9. Vis (1,1'1"1‴) selon la revendication 7, dans laquelle l'au moins un autre épaississement (6",6‴) est de forme conique, l'au moins un autre épaississement (6",6‴) s'élargissant de préférence vers la pointe (4).

10. Vis (1,1'1",1‴) selon au moins l'une des revendications précédentes 7 à 9, dans laquelle un gradin (8",8‴) est disposé sur l'au moins un autre épaississement (6",6‴), le gradin (8",8‴) étant de préférence est disposé selon un angle de 60° à 120° par rapport à l'axe longitudinal de la vis (L), le gradin (8", 8"') étant de préférence disposé perpendiculairement à l'axe longitudinal de la vis (L).

11. Vis (1,1',1",1"') selon au moins l'une des revendications précédentes 7 à 10, dans laquelle un diamètre (D3, D3') d'au moins un autre épaississement (6", 6"') est compris entre 10 % et 50 % d'une profondeur de filetage (t) du filetage (3).

12. Vis (1,1'1",1‴) selon au moins l'une des revendications précédentes 7 à 11, dans laquelle l'au moins un autre épaississement (6", 6‴) présente une longueur (a', a") dans la direction de l'axe longitudinal de la vis (L) , la longueur (a', a") étant inférieure à 5 fois une pente (P) du filetage (3).
